# EUROPEAN PATENT APPLICATION

(11) **EP 4 306 846 A1**
(43) Date of publication of application: **17.01.2024**
(21) Application number: 22184763.5
(22) Date of filing: 13.07.2022
(51) Int. Cl.: F21S 41/365, F21S 43/40, F21S 41/143, F21S 41/148, F21S 43/245

(54) **LAMP UNIT FOR A VEHICLE**

(71) Applicant: ZKW Group GmbH, 3250 Wieselburg (AT)
(72) Inventor: Cho, Wooyoung, Incheon 22744 (KR); Mun, Sang-hyeok, Seoul 07796 (KR); Kim, Bongho, Seoul 07796 (KR); Heo, You Ra, Seoul 07796 (KR); Moon, Won Seok, Seoul 07796 (KR)
(74) Representative: Patentanwaltskanzlei Matschnig & Forsthuber OG

(57) **Abstract**

Lamp unit (1) for a vehicle, wherein said lamp unit (1) is configured to generate at least two different light functions, said lamp unit (1) comprises: a first light module (2), a second light module (3), a light exit surface (4), which is configured to receive light generated by the first light module (2) and/or second light module (3) wherein the lamp unit (1) comprises an optical device (5), which is configured to receive light from the first light module (2) and/or the second light module (3) and to emit said received light towards the light exit surface (4) in such a way, that the light exit surface (4) is illuminated by light from the first light module (2) and/or the second light module (3).

## Description

### Field of the invention and description of prior art

The invention refers to a lamp unit for a vehicle, wherein said lamp unit is configured to generate at least two different light functions, said lamp unit comprises:
* a first light module, comprising a first light source and a first optical unit, said first light module is configured to generate and emit light in order to form a first light function, said light is emitted along a first light beam path,
* a second light module, comprising a second light source and a second optical unit, said second light module is configured to generate and emit light in order to form a second light function, which is different from the first light function, said light is emitted along a second light beam path, which is different from the first beam path,
* a light exit surface, which is configured to receive light generated by the first light module and/or second light module and to let the received light pass through the light exit surface, wherein the light exit surface is arranged outside of at least one of the first light beam path or second light beam path.

Furthermore, the invention refers to a vehicle headlamp comprising a lamp unit.

In the prior art, lamp units for vehicles configured to provide at least two different light functions are well known. Usually, a first light module creates a first light function and a second light module creates a second light function. Said light modules comprise a light exit surface, typically some sort of cover lens, through which the corresponding light function is emitted into a traffic space, for example a road. A disadvantage of the known lamp units is the fact that each of the multiple light units need to be arranged in a specific way in order to emit light into a predefined direction, usually in direction of travel when the lamp unit is mounted to a vehicle. Furthermore, multiple light modules require multiple parts which are more or less equal in their function, therefore, state of the art lamp units tend to have a number of at least partially redundant parts.

It is therefore an object of the present invention to improve the structure of a lamp unit for a vehicle head lamp.

This object is solved with a lamp unit according to claim 1. Preferred embodiments are described in depended claims.

### Summary of the invention

According to a first aspect of the invention the lamp unit comprises
* an optical device, which is arranged between the first light module and the light exit surface and between the second light module and the light exit surface in such a way, that the optical device intersects the first light beam path and the second light beam path, wherein the optical device is configured to receive light from the first light module and/or the second light module and to emit said received light towards the light exit surface in such a way, that the, preferably entire, light exit surface is illuminated by light from the first light module and/or the second light module.

The lamp unit according to the invention has the advantage, that two light modules, which emit two different light functions in different directions (light beam paths) respectively, can illuminate the same light exit surface, wherein the two different light functions can be emitted onto a road through said light exit surface. Therefore, the number of parts needed can be reduced. In particular, a further light exit surface, which is configured to emit the second light function, is not needed. For an observer of the lamp unit, both light functions are emitted via the same illuminated light exit surface. Preferably, light from the first light module and light from the second light module is emitted along parallel paths (or, in other words, gets emitted in the same direction) after passing through the optical device. The optical device can advantageously redirect light received from the first light module and light received from the second light module, such that the redirected light is emitted along a common light beam path, which can be parallel to the first light beam path or the second light beam path, wherein the common light beam path is directed towards the light exit surface. Preferably, the light exit surface can be arranged downstream of the first light beam path of the second light module.

Advantageously, the optical device comprises a, preferably moveable, in particular rotatable about a first axis, semi-transparent element and a, preferably moveable, in particular rotatable about a second axis, reflector element, wherein the semi-transparent element is configured and arranged to receive light from the first light module, wherein the semi-transparent element is configured to
* transmit a first portion of the light received from the first light module through the semi-transparent element, such that the transmitted first portion of the light from the first light module traverses towards the light exit surface after being transmitted through the semi-transparent element,
* reflect a second portion of the light received from the first light module towards the reflector element, said reflector element is arranged and configured to redirect the second portion of the light reflected from the semi-transparent element towards the light exit surface,
wherein the semi-transparent element is further configured and arranged to receive light from the second light module, wherein the semi-transparent element is configured to
* transmit a first portion of the light received from the second light module through the semi-transparent element, such that the transmitted first portion of the light from the second light module traverses towards the reflector element after being transmitted through the semi-transparent element, said reflector element is arranged and configured to redirect the first portion of the light transmitted through the semi-transparent element towards the light exit surface,
* reflect a second portion of the light received from the second light module towards the light exit surface.

The semi-transparent element can be a beam splitter, having a transmittance of essentially 50% and a reflectance of essentially 50%. The reflector element can be a mirror with a reflectance of essentially 100%. Preferably, light receiving surfaces of the semi-transparent element (preferably a so called 50-50 beam splitter device) and the reflector element can be provided with dielectric coatings, well known in the technical field of optics. By providing movability (or rotatability) of the semi-transparent element and the reflector element an angle between the semi-transparent element and the reflector element can be adjusted. For example, both elements can be parallel to each other which is represented by an angle of 0°. In another example, the angle may be an acute angle. By adjusting the angle between the reflector element and the semi-transparent element, the light path between the reflector element and the semi-transparent element can be adjusted by moving or rotating the reflector element relative to the semi-transparent element and vice versa. The first axis and second axis can be parallel to each other. Preferably, the first axis and second axis are orthogonal to the first light beam path and/or the second light beam path. Preferably, the semi-transparent element is configured to reflect the second portion of the light from the second light module towards the light exit surface along a first light exit path, said first light exit path is essentially parallel to the light path of the first portion of the light from the first light module, which gets transmitted through the semi-transparent element. In particular, the first light exit path can be oriented towards the point HV at an ECE aiming screen which is positioned 25 m in front of the lamp unit. Preferably, the reflector element is configured to reflect light received thereon (i.e. the first light portion from the second light module, which gets transmitted through the semi-transparent element, and the second light portion from the first light module, which gets reflected by the semi-transparent element towards the reflector element) in such a way, that the reflected light propagates along a second light exit path, wherein the first light exit path and the second light exit path include an angle greater than 0°, wherein the second light exit path is oriented towards the point HV. The reflector element can be adjusted to reflect light towards the point HV by rotating around the second axis or by forming the reflector surface of the reflector element accordingly.

Advantageously, the semi-transparent element comprises a first light receiving surface and a second light receiving surface, wherein the semi-transparent element, the first light module and the second light module are arranged in such a way, that the first light module emits light towards the first light receiving surface and the second light module emits light towards the second light receiving surface. Preferably, the semi-transparent element comprises a plate-like half mirror, wherein light which enters the half mirror through the first light receiving surface exits the half mirror through the opposite second light receiving surface, which is also configured as a first light exit surface. Vice versa, preferably, light which enters the half mirror through the second light receiving surface exits the half mirror through the opposite first light receiving surface, which is also configured as a second light exit surface. Preferably, the first light receiving surface and the second light receiving surface of the semi-transparent element are planar (or flat) surfaces.

Advantageously, the first light module and the semi-transparent element are arranged in such a way, that the first light beam path and a face vector of the first light receiving surface of the semi-transparent element are oriented at an angle between 40°-50°, preferably substantially 45°. The face vector, also referred to as a normal vector, to a surface is a vector which is perpendicular to the surface at a given point. In this case, the surface can be seen as the first light receiving surface of the semi-transparent element. Preferably, the face vector of the first light receiving surface and the first light beam path lie in the same vertical plane or in two distinct vertical planes which are parallel to each other.

Advantageously, the second light module and the semi-transparent element are arranged in such a way, that the second light beam path and a face vector of the second light receiving surface of the semi-transparent element are oriented at an angle between 40°-50°, preferably substantially 45°. The face vector, also referred to as a normal vector, to a surface is a vector which is perpendicular to the surface at a given point. In this case, the surface can be seen as the second light receiving surface of the semi-transparent element. Preferably, the face vector of the second light receiving surface and the second light beam path lie in the same vertical plane or in two distinct vertical planes which are parallel to each other.

Advantageously, the first light receiving surface and the second light receiving surface are parallel to each other. Preferably, the semi-transparent element can be a beam splitter plate, wherein the first light receiving surface and the second light receiving surface are configured as the acting surfaces of the beam splitter plate (or alternatively a beam splitter cube).

Advantageously, the reflector element comprises a reflector surface, wherein the reflector element and the semi-transparent element are arranged in such a way, that the first light receiving surface of the semi-transparent element and/or the second light receiving surface of the semi-transparent element are essentially parallel to the reflector surface. The reflector surface is configured to receive light and to reflect said light, essentially the entire received light. The reflector surface can be a mirror. Preferably, the reflector surface is planar. In an alternative embodiment, the reflector surface can be a curved surface, in particular a concave surface, such that a radius of an arc defining the curved surface is facing towards the semi-transparent element, in particular towards the second light receiving surface of the semi-transparent element.

Advantageously, the light exit surface is a cover lens, wherein the light path from light received by the cover lens remains essentially unaltered while passing through the cover lens. The light exit surface, in particular the clear cover lenses, is free of optical elements and preferably only serves to protect the light units and the optical device from soiling and weather conditions. Preferably the light exit surface has a transmittance of essentially 100%. The light exit surface can be a flat surface or a curved surface. Advantageously, the light exit surface can have a larger longitudinal extension than the first and second light receiving surface of the semi-transparent element and the reflector surface. Preferably, essentially 50% of the total illumination of the light exit surface comes from light reflected by the reflector element and the other 50% of the total illumination comes from light reflected by the semi-transparent element and light transmitted through the semi-transparent element.

Advantageously, the first light module and the second light module are arranged in such a way, that the first light beam path and second light beam path are essentially orthogonal to each other.

Advantageously, the light exit surface has a longitudinal extension, wherein the first light module, the second light module, and the light exit surface are arranged in such a way, that the longitudinal extension of the light exit surface is essentially orthogonal to the first light beam path and parallel to the second light beam path.

Advantageously, the second optical unit of the second light module comprises a microlens array module, wherein the second light source of the second light module is configured to emit light towards the microlens array module, wherein the microlens array module is configured to form the second light function, wherein preferably a collimator is arranged between the second light source of the second light module and the second optical unit of the second light module, said collimator is configured to parallel light from the second light source. Advantageously, microlens array modules reduce the overall space required by the second light module. In particular, due to the reduced size of the micro lens array module and due to the shorter focal length thereof, the size of the semi-transparent element and/or the reflector element can be reduced as well. Furthermore, due to the shorter focal length, a distance (measured along the direction of light propagation) between the second light module and the semi-transparent element and/or the reflector element can be reduced. The microlens array module is preferably a stacked structure comprising a first microlens array configured as entry optics (which faces the second light source), a screen device comprising a bezel layer and a second microlens array as exit optics (facing the optical element or the collimator). Reference is made to WO 2015058227 A1, which discloses examples of such microlens array modules.

Advantageously, the first optical unit of the first light module comprises a light guide element, preferably a fiber optic element or a longitudinal light guide rod, wherein the first light source of the second light module is configured to emit light into the light guide element, wherein the light guide element is configured to emit light received from the first light source in order to form the second light function.

Advantageously, the second light function is a low beam light distribution or a high beam light distribution.

Advantageously, the first light function is an indicator light, a daytime running light or a hazard light.

According to another aspect of the invention, a vehicle headlamp is provided, comprising a lamp unit.

### Brief description of the drawings

In the following, in order to further demonstrate the present invention, illustrative and non-restrictive embodiments are discussed, as shown in the drawings, wherein:
Fig. 1 a schematic side view of an embodiment of a lamp unit according to the invention;
Fig. 2 another view of the lamp unit of Fig. 1; and
Fig. 3 a perspective view of the lamp unit of Fig. 2.

### Detailed description of embodiments of the invention

In the following figures identical reference signs refer to identical features unless expressly depicted otherwise. The reference signs are only for informational purpose and do not delimit the scope of protection. For the sake of simplicity, elements which are not essential to the invention are not shown in the figure.

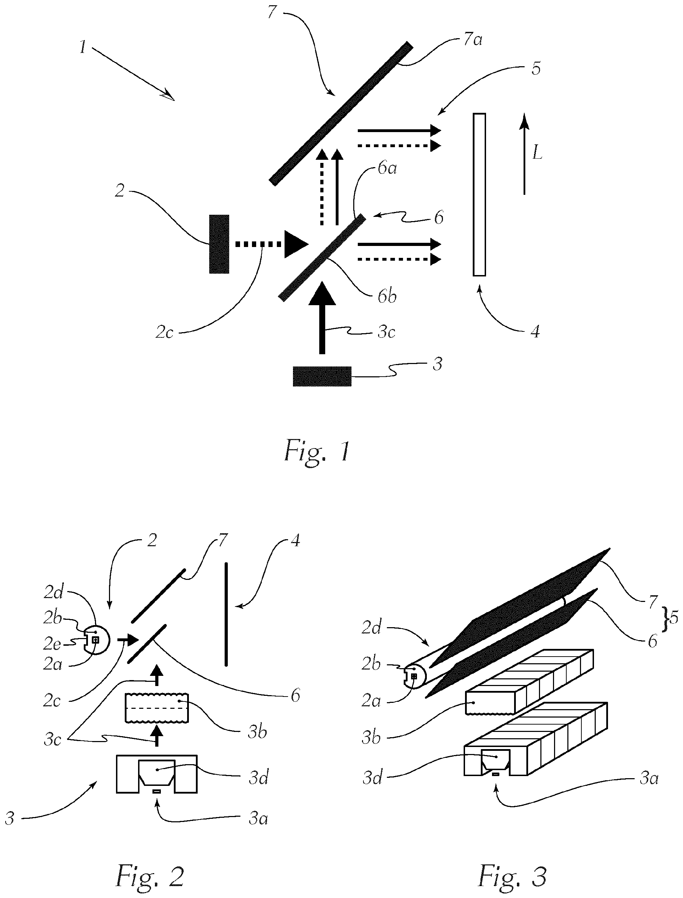

Fig. 1, 2 and 3 show an example of a lamp unit 1 (for a vehicle) according to the invention. The lamp unit 1 is configured to generate at least two different light functions.

The lamp unit 1 comprises a first light module 2 with a first light source 2a and a first optical unit 2b, said first light module 2 is configured to generate and emit light in order to form a first light function, said light is emitted along a first light beam path 2c.

The lamp unit 1 comprises a second light module 3 with a second light source 3a and a second optical unit 3b, said second light module 3 is configured to generate and emit light in order to form a second light function, which is different from the first light function, said light is emitted along a second light beam path 3c, which is different from the first beam path 2c.

In the shown embodiment, the first light module 2 and the second light module 3 are arranged in such a way, that the first light beam path 2c and second light beam path 3c are essentially orthogonal to each other.

In the shown embodiment, the first optical unit 2b of the first light module 2 comprises a light guide element 2d, in particular a fiber optic element. The first light source 2a of the first light module 2 is configured to emit light into the light guide element 2d along a longitudinal axis of the light guide element 2d (in particular the longitudinal axis of the fiber optic element). The light guide element 2d is configured to emit light received from the first light source 2a, preferably via outcoupling elements 2e, said outcoupling elements 2e are configured to redirect light (generated by the first light source 2a) propagating along a longitudinal extension of the light guide element 2d in such a way, that the redirected light exists the light guide element 2d and propagates along the first light beam path 2c, in order to form the first light function.

In the shown embodiment, the second optical unit 3b of the second light module 3 comprises a microlens array module, wherein the second light source 3a of the second light module 3 is configured to emit light towards the microlens array module. The microlens array module is configured to form the second light function, wherein a (optional) collimator 3d is arranged between the second light source 3a of the second light module 3 and the second optical unit 3b of the second light module 3. The collimator 3d is configured to parallel light from the second light source 3a.

The second light function can be a low beam light distribution or a high beam light distribution. The first light function can be an indicator light (for signaling), a daytime running light or a hazard light.

The lamp unit 1 comprises a (for the first light module and second light module common/mutual) light exit surface 4, which is configured to receive light generated by the first light module 2 and/or second light module 3 and to let the received light pass through the light exit surface 4. The light exit surface 4 is arranged outside of the second light beam path 3c of the second light module 3 and preferably downstream of the first light beam path 2c of the second light module 2.

In the shown embodiment, the light exit surface 4 is a transparent cover lens, wherein the light path from light received by the cover lens remains essentially unaltered while passing through the cover lens. The light exit surface 4 can be flat or curved. The light exit surface 4 has a longitudinal extension L, wherein the first light module 2, the second light module 3, and the light exit surface 4 are arranged in such a way, that the longitudinal extension L of the light exit surface 4 is essentially orthogonal to the first light beam path 2c and parallel to the second light beam path 3c.

The lamp unit 1 comprises an optical device 5, which is arranged between the first light module 2 and the light exit surface 4 and between the second light module 3 and the light exit surface 4. The optical device 5 is arranged in such a way, that the optical device 5 intersects the first light beam path 2c and the second light beam path 3c. The optical device 5 is configured to receive light from the first light module 2 and/or the second light module 3 and to emit said received light towards the light exit surface 4 in such a way, that the, preferably entire, light exit surface 4 is illuminated by light from the first light module 2 and/or the second light module 3.

The optical device 5 comprises a, preferably moveable, in particular rotatable about a first axis, semi-transparent element 6 and a, preferably moveable, in particular rotatable about a second axis, reflector element 7. The first axis and second axis are parallel to each other, furthermore, the first axis and second axis lie in a plane which is orthogonal to the first light beam path.

The semi-transparent element 6 is configured and arranged to receive light from the first light module 2. The semi-transparent element 6 is also configured to transmit a first portion of the light received from the first light module 2 through the semi-transparent element 6, such that the transmitted first portion of the light from the first light module 2 traverses towards the light exit surface 4 after being transmitted through the semi-transparent element 6.

The semi-transparent element 6 is also configured to reflect a second portion of the light received from the first light module 2 towards the reflector element 7, wherein the reflector element 7 is arranged and configured to redirect the second portion of the light reflected from the semi-transparent element 6 towards the light exit surface 4.

The semi-transparent element 6 is further configured and arranged to receive light from the second light module 3, wherein the semi-transparent element 6 is configured to transmit a first portion of the light received from the second light module 3 through the semi-transparent element 6, such that the transmitted first portion of the light from the second light module 3 traverses towards the reflector element 7 after being transmitted through the semi-transparent element 6, and the reflector element 7 is arranged and configured to redirect the first portion of the light transmitted through the semi-transparent element 6 towards the light exit surface 4. The semi-transparent element 6 is also configured to reflect a second portion of the light received from the second light module 3 towards the light exit surface 4.

The semi-transparent element 6 comprises a first light receiving surface 6a and a second light receiving surface 6b. The semi-transparent element 6, the first light module 2 and the second light module 3 are arranged in such a way, that the first light module 2 emits light towards the first light receiving surface 6a and the second light module 3 emits light towards the second light receiving surface 6b. The first light module 2 and the semi-transparent element 6 are arranged in such a way, that the first light beam path 2c and a face vector of the first light receiving surface 6a of the semi-transparent element 6 are oriented at an angle of 45°. The second light module 3 and the semi-transparent element 6 are arranged in such a way, that the second light beam path 3c and a face vector of the second light receiving surface 6b of the semi-transparent element 6 are oriented at an angle of 45°. The first light receiving surface 6a and the second light receiving surface 6b are parallel to each other.

The reflector element 7 comprises a reflector surface 7a, which is essentially a mirror. The reflector element 7 and the semi-transparent element 6 are arranged in such a way, that the first light receiving surface 6a of the semi-transparent element 6 and the second light receiving surface 6b of the semi-transparent element 6 are essentially parallel to the reflector surface 7a.

In an operational mode, the first light module 2 creates a first light function, wherein the light forming the first light function gets distributed across the entire light exit surface 4 by the reflection and transmission (as explained above) by optical device 5. While the first light module 2 is active (i.e. turned on), the second light module is usually inactive (i.e. turned off). Vice versa, when the second light module 3 creates the second light function, the first light module 2 is usually inactive. Both light functions are transmitted through the same, mutual light exit surface 4.

Of course, the invention is not limited to the examples given in this specification, which merely show embodiments of the invention that can be carried out by a person skilled in the art in view of this disclosure.

## Claims

1. Lamp unit (1) for a vehicle, wherein said lamp unit (1) is configured to generate at least two different light functions, said lamp unit (1) comprises:
* a first light module (2), comprising a first light source (2a) and a first optical unit (2b), said first light module (2) is configured to generate and emit light in order to form a first light function, said light is emitted along a first light beam path (2c),
* a second light module (3), comprising a second light source (3a) and a second optical unit (3b), said second light module (3) is configured to generate and emit light in order to form a second light function, which is different from the first light function, said light is emitted along a second light beam path (3c), which is different from the first beam path (2c),
* a light exit surface (4), which is configured to receive light generated by the first light module (2) and/or second light module (3) and to let the received light pass through the light exit surface (4), wherein the light exit surface (4) is arranged outside of at least one of the first light beam path (2c) or second light beam path (3c),
**characterized in that** the lamp unit (1) comprises
* an optical device (5), which is arranged between the first light module (2) and the light exit surface (4) and between the second light module (3) and the light exit surface (4) in such a way, that the optical device (5) intersects the first light beam path (2c) and the second light beam path (3c), wherein the optical device (5) is configured to receive light from the first light module (2) and/or the second light module (3) and to emit said received light towards the light exit surface (4) in such a way, that the, preferably entire, light exit surface (4) is illuminated by light from the first light module (2) and/or the second light module (3).

2. Lamp unit (1) according to claim 1, wherein the optical device (5) comprises a, preferably moveable, in particular rotatable about a first axis, semi-transparent element (6) and a, preferably moveable, in particular rotatable about a second axis, reflector element (7),
wherein the semi-transparent element (6) is configured and arranged to receive light from the first light module (2), wherein the semi-transparent element (6) is configured to
* transmit a first portion of the light received from the first light module (2) through the semi-transparent element (6), such that the transmitted first portion of the light from the first light module (2) traverses towards the light exit surface (4) after being transmitted through the semi-transparent element (6),
* reflect a second portion of the light received from the first light module (2) towards the reflector element (7), said reflector element (7) is arranged and configured to redirect the second portion of the light reflected from the semi-transparent element (6) towards the light exit surface (4),
wherein the semi-transparent element (6) is further configured and arranged to receive light from the second light module (3), wherein the semi-transparent element (6) is configured to
* transmit a first portion of the light received from the second light module (3) through the semi-transparent element (6), such that the transmitted first portion of the light from the second light module (3) traverses towards the reflector element (7) after being transmitted through the semi-transparent element (6), said reflector element (7) is arranged and configured to redirect the first portion of the light transmitted through the semi-transparent element (6) towards the light exit surface (4),
* reflect a second portion of the light received from the second light module (3) towards the light exit surface (4).

3. Lamp unit (1) according to claim 2, wherein the semi-transparent element (6) comprises a first light receiving surface (6a) and a second light receiving surface (6b), wherein the semi-transparent element (6), the first light module (2) and the second light module (3) are arranged in such a way, that the first light module (2) emits light towards the first light receiving surface (6a) and the second light module (3) emits light towards the second light receiving surface (6b).

4. Lamp unit (1) according to claim 2 or 3, wherein the first light module (2) and the semi-transparent element (6) are arranged in such a way, that the first light beam path (2c) and a face vector of the first light receiving surface (6a) of the semi-transparent element (6) are oriented at an angle between 40°-50°, preferably substantially 45°.

5. Lamp unit (1) according to any one of claims 3 to 4, wherein the second light module (3) and the semi-transparent element (6) are arranged in such a way, that the second light beam path (3c) and a face vector of the second light receiving surface (6b) of the semi-transparent element (6) are oriented at an angle between 40°-50°, preferably substantially 45°.

6. Lamp unit (1) according to any one of claims 3 to 5, wherein the first light receiving surface (6a) and the second light receiving surface (6b) are parallel to each other.

7. Lamp unit (1) according to any one of claims 3 to 6, wherein the reflector element (7) comprises a reflector surface (7a), wherein the reflector element (7) and the semi-transparent element (6) are arranged in such a way, that the first light receiving surface (6a) of the semi-transparent element (6) and/or the second light receiving surface (6b) of the semi-transparent element (6) are essentially parallel to the reflector surface (7a).

8. Lamp unit (1) according to any one of the preceding claims, wherein the light exit surface (4) is a cover lens, wherein the light path from light received by the cover lens remains essentially unaltered while passing through the cover lens.

9. Lamp unit (1) according to any one of the preceding claims, wherein the first light module (2) and the second light module (3) are arranged in such a way, that the first light beam path (2c) and second light beam path (3c) are essentially orthogonal to each other.

10. Lamp unit (1) according to any one of the preceding claims, wherein the light exit surface (4) has a longitudinal extension (L), wherein the first light module (2), the second light module (3), and the light exit surface (4) are arranged in such a way, that the longitudinal extension (L) of the light exit surface (4) is essentially orthogonal to the first light beam path (2c) and parallel to the second light beam path (3c).

11. Lamp unit (1) according to any one of the preceding claims, wherein the second optical unit (3b) of the second light module (3) comprises a microlens array module, wherein the second light source (3a) of the second light module (3) is configured to emit light towards the microlens array module, wherein the microlens array module is configured to form the second light function, wherein preferably a collimator (3d) is arranged between the second light source (3a) of the second light module (3) and the second optical unit (3b) of the second light module (3), said collimator (3d) is configured to parallel light from the second light source (3a).

12. Lamp unit (1) according to any one of the preceding claims, wherein the first optical unit (2b) of the first light module (2) comprises a light guide element (2d), preferably a light guide optic element, wherein the first light source (2a) of the second light module (2) is configured to emit light into the light guide element (2d), wherein the light guide element (2d) is configured to emit light received from the first light source (2a) in order to form the second light function.

13. Lamp unit (1) according to any one of the preceding claims, wherein the first light function is an indicator light, a daytime running light or a hazard light.

14. Lamp unit (1) according to any one of the preceding claims, wherein the second light function is a low beam light distribution or a high beam light distribution.

15. Vehicle headlamp, comprising a lamp unit (1) according to any one of the preceding claims.
